# EUROPÄISCHE PATENTSCHRIFT

(11) **EP 3 459 341 B1**
(45) Veröffentlichungstag und Bekanntmachung des Hinweises auf die Patenterteilung: **08.09.2021**
(21) Anmeldenummer: 18184921.7
(22) Anmeldetag: 23.07.2018
(51) Int. Cl.: A01F 15/07

(54) **LANDWIRTSCHAFTLICHE RUNDBALLENPRESSE**
AGRICULTURAL ROUND BALER
PRESSE À BALLES RONDES AGRICOLE

(30) Priorität: 26.09.2017 DE 102017122214
(43) Veröffentlichungstag der Anmeldung: 27.03.2019
(73) Patentinhaber: Usines CLAAS France S.A.S, 57140 St. Rémy / Woippy (FR)
(72) Erfinder: Cyrille, Arnould, 57645 Montoy Flonville (FR); Rongvaux, Laurent, 54800 Tronville (FR)
(74) Vertreter: CLAAS Gruppe

(56) Entgegenhaltungen:
- EP-A1- 0 870 424
- DE-A1- 10 257 084
- DE-U1- 29 706 540
- FR-A1- 2 767 635
- US-A- 2 627 223

## Beschreibung

Die vorliegende Anmeldung betrifft eine Rundballenpresse gemäß dem Oberbegriff von Anspruch 1. Diese umfasst insbesondere einen mittels einer Mehrzahl von Führungsrollen geführten Pressriemen, der innerhalb eines Innenraums eines Gehäuses der Rundballenpresse umlaufend gelagert ist. Der Pressriemen begrenzt eine Presskammer, sodass der Presskammer zugeführtes Material innerhalb der Presskammer zu einem Rundballen formbar ist.

Eine derartige Rundballenpresse ist bereits aus der europäische Patentschrift EP 2 269 440 B1 bekannt. Letztere offenbart eine Rundballenpresse mit einer sogenannten "variablen Presskammer", die über eine Stelleinrichtung mit zwei einander zugeordneten Stellrollen verfügt. Unmittelbar an diese Stellrollen angrenzende Laufstreckenabschnitte des Pressriemens begrenzen die Presskammer, wobei die Stellrollen mittels der Stelleinrichtung innerhalb des Innenraums des Gehäuses der Rundballenpresse bewegbar sind, sodass ein Volumen der Presskammer variabel ist. Auf diese Weise kann der Pressriemen im Zuge des Anwachsens eines im Entstehen begriffenen Rundballens sukzessive nachgeführt werden, sodass der Rundballen geformt werden kann.

Eine Rundballenpresse mit variabler Presskammer ist aus der DE 297 06 540 U1 bekannt, wobei die Presskammer eine kleine Startkammer an einer Zuführöffnung aufweist. Die Startkammer weist dabei einen ersten Wandabschnitt mit flexibler Preßbahn auf und zwischen diesem ersten und einem angrenzenden Wandabschnitt ist, oberhalb der Zuführöffnung, eine Preßbahn-Umlenkvorrichtung im Gehäuse gelagert. Aus den Druckschriften EP 0 870 424 A1 und der DE 102 57 084 A1 sind weitere Rundballenpressen mit variablen Presskammern bekannt.

Bei den bekannten Rundballenpressen hat es sich als problematisch erwiesen, eine Konstruktion zu finden, die für verschiedene Anwendungsfälle eine Rundballenpresse gleichermaßen geeignet ist. Somit besteht anwenderseitig zum einen der Wunsch nach einer Rundballenpresse, die vergleichsweise schwach verdichtete Rundballen erzeugen kann. Für andere Anwendungsfälle besteht hingegen der Wunsch, stark gepresste bzw. verdichtete Rundballen herzustellen. Der Vorzug für die eine oder andere Variante kann insbesondere von der Art des gepressten Ernteguts, dessen Zustand und/oder dessen geplanter Verwendung abhängen.

In der Technik haben sich für die Herstellung von schwach gepressten Rundballen insbesondere solche Rundballenpressen als vorteilhaft erwiesen, deren Presskammer nicht variabel ist, sondern einen fixen Querschnitt aufweist. Dies hat zur Folge, dass das zu verdichtende Material in einem Anfangsstadium des im Entstehen begriffenen Rundballens kaum gepresst wird, da es nicht unmittelbar gegen eine Spannkraft eines Pressriemens in die Presskammer eingebracht werden muss. Zur Herstellung stark verdichteter Rundballen haben sich hingegen Rundballenpressen mit variabler Presskammer als vorteilhaft erwiesen, bei denen - wie bei dem vorstehend genannten Beispiel aus dem Stand der Technik - der Pressriemen mit dem Anwachsen des Rundballen sukzessive nachgeführt wird und auf diese Weise bereits im Anfangsstadium des Rundballens eine Presswirkung auf das Erntegut ausüben kann. In der Praxis kommt es nunmehr häufig vor, dass ein Landwirt verschiedene Rundballenpressen vorhalten muss, um für einen jeweiligen Verwendungszweck gerüstet zu sein.

Der vorliegenden Erfindung liegt mithin die Aufgabe zugrunde, eine Rundballenpresse bereitzustellen, die möglichst flexibel für die verschiedenen Vorgaben für Rundballen anwendbar ist.

Die zugrunde liegende Aufgabe wird erfindungsgemäß mittels einer Rundballenpresse mit den Merkmalen des Anspruchs 1 gelöst. Vorteilhafte Ausgestaltungen einer solchen Rundballenpresse sind den Unteransprüchen 2 bis 11 zu entnehmen. Bei der erfindungsgemäßen Rundballenpresse handelt es sich um eine solche mit variabler Presskammer.

Die "Zuführeinrichtung" kann insbesondere von einer Welle gebildet sein, die mit radial vorstehenden Führungselementen ausgestattet ist, die dazu geeignet sind, das jeweilige Erntegut zu greifen und auf diese Weise zu fördern. Die Zuführeinrichtung ist typischerweise in einem Zuführkanal angeordnet, der an einer Unterseite der Rundballenpresse angeordnet ist und in den Innenraum der Rundballenpresse mündet. Der Zuführkanal ist insbesondere dazu geeignet, jeweiliges Erntegut ausgehend von einem Untergrund in den Innenraum zu führen.

Die "Führungsrollen" erstrecken sich typischerweise in Querrichtung der Rundballenpresse zwischen einander gegenüberliegenden Seitenwänden des Gehäuses der Rundballenpresse und sind in aller Regel fest innerhalb des Gehäuses angeordnet. Die Führungsrollen dienen dazu, den an ihnen entlanggeführten Pressriemen innerhalb des Innenraums umzulenken und somit auf einer gewünschten Laufstrecke zu führen.

Die "Querrichtung der Rundballenpresse" ist senkrecht zu einer Fahrtrichtung der Rundballenpresse sowie horizontal orientiert, wobei eine Rotationsachse eines jeweils erzeugten Rundballens parallel zu der Querrichtung der Rundballenpresse ausgerichtet ist.

Der Pressriemen als solcher ist in Form eines Endlosriemens, insbesondere in Form eines flachen Endlosriemens, ausgebildet. Eine dem zu pressenden Erntegut zugewandte Oberfläche des Pressriemens kann mit einer speziellen Oberflächengeometrie versehen sein, um eine möglichst große Reibkraft auf das Erntegut übertragen zu können, sodass mittels der Bewegung des Pressriemens entlang der Führungsrollen dem Rundballen eine Rotation um dessen Mittelachse aufzwingbar ist.

Die Stelleinrichtung, die zumindest eine Stellrolle umfasst, ist dazu geeignet, die Laufstrecke des Pressriemens innerhalb des Innenraums der Rundballenpresse zumindest entlang eines Teils der Laufstrecke zu verlagern. Hierzu ist die Stellrolle bewegbar ausgebildet, wobei es sich versteht, dass mittels einer Bewegung bzw. Verlagerung der Stellrolle innerhalb des Innenraums der Rundballenpresse auch der über die Stellrolle geführte Pressriemen eine Lageänderung erfährt. Dieses Prinzip ist für Rundballenpressen mit variabler Presskammer von zentraler Bedeutung.

Erfindungsgemäß verfügt die Rundballenpresse zusätzlich zu der ersten Stelleinrichtung ferner über eine zweite Stelleinrichtung, die gleichermaßen über mindestens eine Stellrolle verfügt. Die zweite Stelleinrichtung wirkt derart mit der ersten Stelleinrichtung zusammen, dass beide gemeinsam die Presskammer der Rundballenpresse zumindest teilweise aufspannen. Das heißt, dass sich jeweils an die Stellrollen der beiden Stelleinrichtungen Laufstreckenabschnitte anschließen, die die Presskammer zumindest teilweise begrenzen. Dabei ist die Stellrolle der zweiten Stelleinrichtung ebenso wie diejenige der ersten Stelleinrichtung innerhalb des Innenraums der Rundballenpresse bewegbar, sodass eine Veränderung der Führung der Laufstrecke des Pressriemens innerhalb des Innenraums neben der ersten Stelleinrichtung auch mittels der zweiten Stelleinrichtung beeinflussbar ist.

Die erfindungsgemäße Rundballenpresse hat viele Vorteile. Insbesondere ermöglicht sie es, eine Geometrie der Presskammer gegenüber dem Stand der Technik zu verändern. Wie am Beispiel des oben genannten europäischen Patents erkennbar, weisen die Presskammern bekannter Rundballenpressen mit variabler Presskammer in aller Regel einen dreiecksförmigen Querschnitt auf. Dieser entsteht dadurch, dass der Pressriemen ausgehend von einer feststehenden Führungsrolle zu der im Stand der Technik lediglich bekannten einen Stelleinrichtung bzw. deren Stellrolle(n) und schließlich ausgehend von der Stellrolle einer weiteren feststehenden Führungsrolle geführt wird. Die feststehenden Führungsrollen sind dabei in aller Regel in unmittelbarer Umgebung des Übertrittsquerschnitts angeordnet, durch den hindurch das zu verdichtende Erntegut ausgehend von dem Zuführkanal in den Innenraum bzw. die Presskammer übertritt. Aufgrund der drei "Fixpunkte" des Pressriemens entlang der Presskammer ergibt sich somit die bekannte dreiecksförmige Geometrie derselben.

Die bekannte Dreiecksform einer jeweiligen Presskammer hat zur Folge, dass selbst mittels Bewegung der Stellrolle(n) mittels der Stelleinrichtung lediglich eine bedingte Veränderung der Lage der Laufstrecke des Pressriemens innerhalb des Innenraums erreichbar ist. Dies bewirkt letztlich, dass das zu pressenden Erntegut im Zuge seines Eintritts in die Presskammer bereits in einem sehr frühen Stadium des im Entstehen begriffenen Rundballens gegen den Pressriemen gedrückt wird und dabei eine Verdichtung erfährt. Die Dreiecksform der Presskammer hat zudem zur Folge, dass das Erntegut lediglich entlang zweier langer Seiten der Presskammer gestützt bzw. gepresst wird, wodurch der Ballen in seinem Anfangsstadium weniger eine runde Form als eine Dreiecksform erhält. Es versteht sich, dass eine solche zur Erzeugung eines Rundballens nicht gewünscht ist, wobei es in der Praxis sogar dazu kommen kann, dass die Erzeugung eines Rundballens vollständig fehlschlägt, da der Rundballen nicht in die angestrebte Rotationsbewegung gelangt.

Mittels der zweiten Stelleinrichtung der erfindungsgemäßen Rundballenpresse kann nunmehr hingegen die Geometrie der Presskammer deutlich variabler gestaltet werden, wobei insbesondere die Erzeugung eines viereckigen Querschnitts der Presskammer möglich ist. Zudem ist die Lage der Laufstrecke des Pressriemens innerhalb des Innenraums mittels der Umlenkung des Pressriemens an insgesamt zwei bewegbaren Stellen, nämlich an der jeweiligen Stellrolle der Stelleinrichtung, möglich, sodass das Volumen der Presskammer flexibler einstellbar ist.

Im Hinblick auf die zugrunde liegende Aufgabe ist es insbesondere möglich, die Stelleinrichtungen vor der Zuführung des Ernteguts in eine solche Stellung zu bringen, dass der Pressriemen eine vergleichsweise große Presskammer aufspannt. Der Presskammer zugeführtes Erntegut muss sodann zumindest in einem Anfangsstadium des im Entstehen begriffenen Rundballens nicht unmittelbar entgegen der Spannung des Pressriemens gefördert werden, sodass das Erntegut zumindest zunächst kaum verdichtet wird. Auf diese Weise lässt sich ohne Weiteres ein schwach verdichteter Rundballen erzeugen, falls dies gewünscht ist. Umgekehrt können die Stelleinrichtungen bzw. deren Stellrollen auch derart platziert werden, dass die Presskammer im Moment der Zuführung von Erntegut zur Erzeugung eines neuen Rundballens einen sehr kleinen Querschnitt aufweist, sodass das Erntegut innerhalb der Presskammer unmittelbar gegen den Pressriemen "gedrückt" wird und folglich eine hohe Verdichtung erfährt. Die im Stand der Technik bekannten Nachteile einer ungünstigen Geometrie der Presskammer, insbesondere einer solchen in Form eines stark verzerrten Dreiecks, werden dabei vollständig vermieden.

Etwaige Anlaufschwierigkeiten eines neuen Rundballens, wie sie im Stand der Technik in der beschriebenen Weise durchaus bekannt sind, sind bei der erfindungsgemäßen Rundballenpresse folglich nicht zu erwarten. Sollte sich doch einmal ein im Entstehen begriffener Rundballen derart festsetzen, dass er nicht weiter innerhalb der Presskammer rotieren kann oder die Rotation gar nicht erst aufnimmt, ist es zudem mittels der erfindungsgemäßen Rundballenpresse besonders einfach möglich, den Querschnitt der Presskammer durch Verlagerung der Stellrollen beider Stelleinrichtungen zu verändern und auf diese Weise die Blockade des Rundballens aufzulösen. Im Stand der Technik hat eine solche Verlagerung der Stellrollen der jeweiligen Stelleinrichtung vergleichsweise wenig zur Lösung des Problems beigetragen, da die Laufstrecke des Pressriemens nur in vergleichsweise geringen Maße verglichen mit der erfindungsgemäßen Rundballenpresse überhaupt veränderbar war. Nach einer Veränderung der Lage der Stellrollen beider Stelleinrichtungen innerhalb des Innenraums kann sodann ein abermaliges Anfahren des Rundballens versucht werden.

Ein weiterer Vorteil der erfindungsgemäßen Rundballenpresse ist darin zu sehen, dass der jeweilige Rundballen innerhalb des Innenraums der Rundballenpresse nunmehr an insgesamt vier "Ecken" gelagert ist, nämlich an den ortsfesten, typischerweise beidseits des Übertrittsquerschnitts angeordneten Führungsrollen sowie an den Stellrollen der Stelleinrichtungen. Hierdurch ist der Rundballen bei der erfindungsgemäßen Rundballenpresse gegenüber dem Stand der Technik deutlich stabiler gelagert.

Ein weiterer Vorteil der erfindungsgemäßen Rundballenpresse besteht darin, dass die Ausübung von Pressdruck auf das zu pressenden Erntegut zumindest im Wesentlichen erst innerhalb der Presskammer mittels des Pressriemens stattfindet, wobei vor allem einander gegenüberliegende Laufstreckenabschnitte des Pressriemens einander entgegengesetzt wirkende Presskräfte auf den Rundballen bzw. das Erntegut ausüben können. Im Vergleich dazu wird im Stand der Technik das Erntegut im Moment der Entstehung des Rundballens zunächst ausgehend von dem Zuführkanal unmittelbar gegen den Pressriemen gedrückt, bis ein initialer Rundballen entsteht, der sich sodann innerhalb der Presskammer drehen kann. Die Zuführeinrichtung bei der Rundballenpresse gemäß dem Stand der Technik musste dementsprechend eine hohe Förderleistung aufweisen, um das Erntegut entgegen der Spannung des Pressriemens in die Presskammer drücken zu können. Bei der erfindungsgemäßen Rundballenpresse ist eben dies nicht länger erforderlich, da der Pressriemen den Eintritt des Ernteguts in die Presskammer nicht länger blockiert, was auf die mittels der zwei Stelleinrichtungen erzeugbaren Geometrie der Presskammer zurückzuführen ist.

In der erfindungsgemäßen Rundballenpresse umfasst mindestens eine der Stelleinrichtungen, vorzugsweise beide Stelleinrichtungen, zwei Stellrollen, die gemeinsam ein Rollenpaar bilden. Vorteilhafterweise sind beide Stellrollen einer Stelleinrichtung bewegbar ausgebildet. Insbesondere sind die Stellrollen eines Rollenpaares derart einander zugeordnet, dass ihre Relativpositionen zueinander fest sind. Das heißt dass sie im Zuge einer Bewegung innerhalb des Innenraums der Rundballenpresse keine Relativbewegung zueinander ausführen. Die Ausgestaltung einer jeweiligen Stelleinrichtung mit zwei Stellrollen hat den Vorteil, dass der Pressriemen, der der Stelleinrichtung zugeführt wird, doppelt umgelenkt werden kann, wohingegen der Pressriemen bei Verwendung lediglich einer Stellrolle lediglich einmal umgelenkt werden kann.

Insbesondere ist eine solche Ausgestaltung der Rundballenpresse von Vorteil, bei der mindestens einer der Stelleinrichtungen, vorzugsweise beiden Stelleinrichtungen, jeweils mindestens eine Umlenkrolle zugeordnet ist. Diese Umlenkrolle wirkt derart mit den beiden Stellrollen einer jeweiligen Stelleinrichtung zusammen, dass sich der Pressriemen ausgehend von der ersten Stellrolle zu der Umlenkrolle und von der Umlenkrolle zu der zweiten Stellrolle erstreckt. Die Kombination der Stellrollen einer jeweiligen Stelleinrichtung mit einer Umlenkrolle bietet den Vorteil, dass auf einer Verbindungsstrecke, die sich zwischen der Umlenkrolle und dem von den Stellrollen gebildeten Rollenpaar erstreckt, gewissermaßen ein Vorrat des Pressriemens vorhaltbar ist, der eine Bewegung der Stellrollen der jeweiligen Stelleinrichtung ermöglicht. Mit anderen Worten wird erreicht, dass eine Veränderung der Position der Stellrollen - und damit eine Veränderung der Lage der Laufstrecke des Pressriemens innerhalb des Innenraums - vorgenommen werden kann, ohne dass der Pressriemen entlang seiner Laufstrecke entsprechend der Bewegung der Stellrollen nachgeführt werden muss. Stattdessen werden die Stellrollen vorteilhafterweise gewissermaßen lediglich entlang der Verbindungsstrecke zwischen den Stellrollen und der Umlenkrolle bewegt, sodass sich lediglich eine Umlenkstelle des Pressriemens innerhalb des Innenraums verändert, der Pressriemen jedoch im Übrigen seine Lage beibehält. Dies gilt insbesondere auch für die übrigen Laufrollen, die feststehend in dem Gehäuse ausgeführt werden können.

Die erfindungsgemäße Rundballenpresse weiter ausgestaltend sind die Stelleinrichtungen miteinander gekoppelt, sodass ihre jeweilige Stellrolle bzw. Stellrollen synchron zueinander innerhalb des Innenraums verlagerbar sind. In einer solchen Ausgestaltung geht eine Veränderung der Lage der Stellrolle der einen Stelleinrichtung automatisch mit einer analogen Veränderung der Lage der Stellrolle der anderen Stelleinrichtung einher. Dies ist insofern von besonderem Vorteil, als die Presskammer, deren Volumen sich im Zuge der Bewegung der jeweiligen Stellrollen ändert, bezüglich ihrer Querschnittsform konstant gehalten werden kann. Mithin kann vermieden werden, dass es zu einer übermäßigen Verzerrung der Querschnittsform der Presskammer kommt, was wiederum für die Erzeugung eines Rundballens ungünstig sein könnte.

Weiterhin kann eine solche Rundballenpresse von besonderem Vorteil sein, bei der sich der Übertrittsquerschnitt zwischen zwei parallel zu der Querrichtung der Rundballenpresse erstrecken Führungsrollen erstreckt. Ein solcher Übertrittsquerschnitt liegt vorteilhafterweise in einer Ebene, die die Mittelachsen dieser beiden Führungsrollen enthält. Bei einer auf diese Weise ausgeführten Rundballenpresse wird die Presskammer typischerweise mittels insgesamt vier Umlenkstellen aufgespannt, nämlich den beiden genannten Führungsrollen sowie den beiden Stelleinrichtungen bzw. deren Stellrollen.

Mittels der genannten Ausgestaltung ist es besonders einfach möglich, eine viereckige Presskammer aufzuspannen, wobei sich der Pressriemen vorteilhafterweise ausgehend von einer ersten Führungsrolle zunächst zu der ersten Stelleinrichtung, sodann zu der zweiten Stelleinrichtung und schließlich zu der zweiten Führungsrolle erstreckt. Im Übrigen wird der Pressriemen mittels weiterer Führungsrollen derart innerhalb des Innenraums der Rundballenpresse geführt, dass eine Kollision mit einem im Entstehen begriffenen Rundballen ausgeschlossen ist. Die Vorteile einer viereckigen Presskammer sind vorstehend bereits dargelegt. Insbesondere sind spitz zulaufende Winkel an Umlenkstellen des Pressriemens besonders einfach vermeidbar, wodurch die Ausbildung eines Rundballens vereinfacht ist. Zudem kann eine Ausübung einer Presskraft auf das zu pressende Erntegut in vorteilhafter Weise an mehreren Seiten des Rundballens vorgenommen werden, sodass die Krafteinwirkung auf das Erntegut insgesamt vergleichmäßigt ist.

Weiter vorzugsweise ist die viereckige Presskammer derart ausgeformt, dass sie - in einem Querschnitt betrachtet - an drei ihrer Seiten mittels des Pressriemens begrenzt ist und in ihrer vierten Seite den Übertrittsquerschnitt aufweist. Bei einer solchen Presskammer ist es besonders einfach möglich, das zu pressende Erntegut mittels einer vergleichsweise geringen Förderleistung in die Presskammer einzuführen und sodann erst innerhalb der Presskammer zu dem Rundballen zu pressen. Diese Ausführung erlaubt eine kleinere Dimensionierung der Zuführeinrichtung, da diese eine im Stand der Technik üblicherweise hohe Förderleistung zur Förderung des Ernteguts entgegen der Spannung eines jeweiligen Pressriemens nicht aufbringen muss.

Bezüglich des Querschnitts der Presskammer ist insbesondere eine Trapezform zu bevorzugen, wobei sich eine solche Presskammer vorteilhafterweise ausgehend von dem Übertrittsquerschnitt, vorzugsweise symmetrisch, erweitert. Die Symmetrie besteht dabei weiter vorzugsweise bezüglich einer Mittelebene, die senkrecht zu dem Übertrittsquerschnitt sowie parallel zu einer Längsrichtung des Übertrittsquerschnitt bzw. der Querrichtung der Rundballenpresse orientiert ist und mittig an den Übertrittsquerschnitt gelegen ist. Idealerweise ist die Presskammer mithin derart symmetrisch ausgebildet, dass der Mittelpunkt des jeweiligen Rundballens fortwährend während seiner Entstehung zumindest im Wesentlichen in der Mittelebene liegt, unabhängig von seinem Radius. Eine auf diese Weise symmetrisch ausgebildet Presskammer ist hinsichtlich einer möglichst einheitlichen Krafteinwirkung auf den im Entstehen begriffenen Rundballen zu bevorzugen.

In der erfindungsgemäßen Rundballenpresse umfasst mindestens eine der Stelleinrichtungen, vorzugsweise beide Stelleinrichtungen, mindestens einen Linearantrieb, mittels dessen die Stellrollen des Rollenpaares der jeweiligen Stelleinrichtung innerhalb des Innenraums der Rundballenpresse entlang einer Geraden bewegbar sind. Diese Gerade erstreckt sich vorteilhafterweise zwischen den Stellrollen bzw. dem Rollenpaar und der diesen zugeordneten, feststehenden Umlenkrolle. Dies hat zur Folge, dass mittels einer Bewegung der Stellrollen einer jeweiligen Stelleinrichtung lediglich ein Abstand zwischen den Stellrollen und der zugeordneten Umlenkrolle verändert wird, wobei die Stellrollen letztlich entlang der Laufstrecke des Pressriemens geführt werden, die sich zwischen den Stellrollen und der Umlenkrolle erstreckt. Im Zuge dessen werden die Laufstreckenabschnitte des Pressriemens, die sich unmittelbar an die Stellrollen anschließen, verlagert, sodass sich das Volumen und/oder die Geometrie der Presskammer verändern.

Vorzugsweise kann der Linearantrieb der auf diese Weise ausgebildeten Stelleinrichtung bzw. Stelleinrichtungen eine Kolben-Zylinder-Einheit umfassen. Hierbei ist es insbesondere denkbar, dass eine Umlenkrolle an einem feststehenden Zylinder der Kolben-Zylinder-Einheit angeordnet ist, während die Stellrollen sich an einem dem Zylinder abgewandten Ende des beweglichen Kolbens der Kolben-Zylinder-Einheit befinden. Auf diese Weise können die Stellrollen besonders einfach mittels Verlagerung des Kolbens innerhalb des Zylinders bewegt werden.

Die erfindungsgemäße Rundballenpresse wird nachstehend anhand von Ausführungsbeispielen, die in den Figuren dargestellt sind, näher erläutert. Es zeigt:
- Fig. 1:: Eine Rundballenpresse gemäß dem Stand der Technik,
- Fig. 2:: Eine Prinzipskizze einer Führung eines Pressriemens einer erfindungsgemäßen Rundballenpresse,
- Fig. 3:: Eine Prinzipskizze der Führung des Pressriemens gemäß Figur 2, wobei ein Volumen einer Presskammer gegenüber einem in Figur 2 gezeigten Zustand verändert ist, und

- Fig. 4:: Eine Prinzipskizze einer Führung eines Pressriemens einer weiteren erfindungsgemäßen Rundballenpresse.

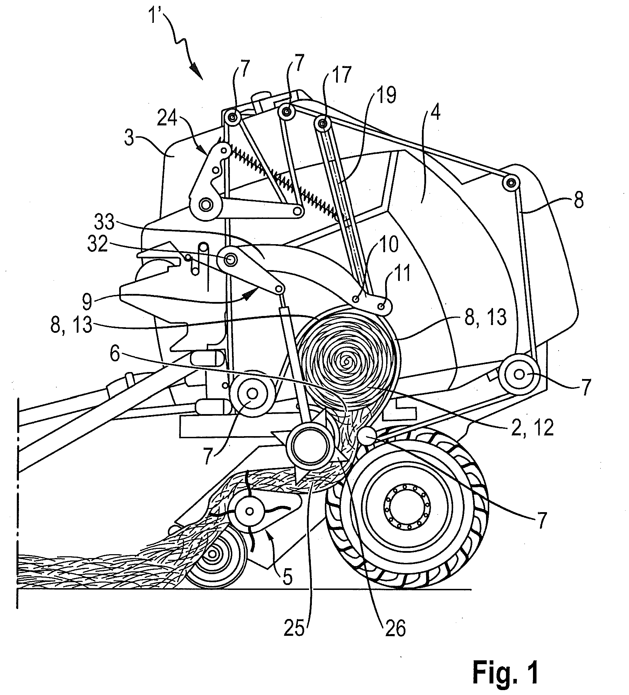

Ein erstes Ausführungsbeispiel, das in **Figur 1** dargestellt ist, umfasst eine Rundballenpresse **1'** gemäß dem Stand der Technik. Diese umfasst wiederum ein Gehäuse **3,** das einen Innenraum **4** aufweist, sowie eine innerhalb des Innenraums **4** mittels eines Pressriemens **8** begrenzte Presskammer **12,** innerhalb derer in dem in **Figur 1** gezeigten Zustand gerade ein Rundballen **2** gepresst wird. Der Pressriemen **8** ist mittels einer Mehrzahl von Führungsrollen **7** innerhalb des Innenraums **4** geführt, wobei eine der Führungsrollen **7** als Antriebsrolle ausgeführt ist. Auf diese Weise ist der endlos sowie in sich flache Pressriemen **8** fortlaufend um die Führungsrollen **7** bewegbar. Letzte erstrecken sich parallel zu einer Querrichtung der Rundballenpresse **1'.**

Die bekannte Rundballenpresse **1'** weist eine Zuführeinrichtung **5** auf, die in Form einer rotierenden Welle ausgebildet ist. Diese ist mit vier sich radial ausgehend von einer äußeren Mantelfläche der Welle erstreckenden Förderelementen ausgestattet, sodass die Zuführeinrichtung **5** im Zuge ihrer Rotation Erntegut in Richtung des Innenraums **4** der Rundballenpresse **1'** fördern kann. Hierbei wird das Erntegut durch einen Zuführkanal **25** geführt, wobei in dem gezeigten Beispiel das Erntegut vor einem Übertritt von dem Zuführkanal **25** in die Presskammer **12** mittels einer Schneideinrichtung **26** zerkleinert wird. Das Erntegut tritt schließlich durch einen Übertrittsquerschnitt **6** hindurch in die Presskammer **12** ein.

Letztere ist nach unten hin durch den Übertrittsquerschnitt **6** sowie nach oben und zu den Seiten durch den Pressriemen **8** begrenzt. Um den Pressriemen **8** im Zuge des Anwachsens des Rundballens **2** entsprechend nachführen zu können, verfügt die Rundballenpresse **1'** über einer Stelleinrichtung **9.** Dieser umfasst einen Schwenkarm **33,** der um eine Schwenkachse **32** verschwenkbar gelagert ist. An einem der Schwenkachse **32** abgewandten Ende des Schwenkarms **33** verfügt die Stelleinrichtung **9** über zwei Stellrollen **10, 11.** Diese sind im Zuge einer Verschwenkung des Schwenkarms **33** um dessen Schwenkachse **32** innerhalb des Innenraums **4** verlagerbar, sodass eine mittels der Stellrollen **10, 11** bewirkte Umlenkung des Pressriemens **8** gleichermaßen verlagerbar ist. Die Stelleinrichtung **9** wirkt hier mit einer den Stellrollen **10, 11** zugeordneten Umlenkrolle **17** zusammen, die beabstandet von den Stellrollen **10, 11** angeordnet ist. Der Pressriemen **8** ist dabei derart geführt, dass er sich ausgehend von der ersten Stellrolle **10** zu der Umlenkrolle **17** und sodann von der Umlenkrolle **17** zu der zweiten Stellrolle **11** erstreckt. Eine Bewegung der Stellrollen **10, 11** im Zuge der Verschwenkung des Schwenkarms **33** erfolgt zumindest annähernd entlang einer gerade ausgebildeten Verbindungsstrecke **19,** die das von den Stellrollen **10, 11** gebildete Rollenpaar mit der Umlenkrolle **17** verbindet. Weiterhin wirkt die Rundballenpresse **1'** mit einer Spannvorrichtung **24** zusammen, die unter Einwirkung einer Federkraft den Pressriemen **8** spannt.

Wie sich besonders gut anhand der Darstellung gemäß **Figur 1** ergibt, wird die Presskammer **12** der Rundballenpresse **1'** mittels der Wirkung dreier Umlenkstellen aufgespannt. Diese sind von den seitlich neben dem Übertrittsquerschnitt **6** angeordneten Umlenkrollen **7** sowie dem von den Stellrollen **10, 11** gebildeten Rollenpaar gebildet. Die Umlenkung des Pressriemens **8** an diesen drei Umlenkstellen bewirkt, dass eine dreiecksförmige Presskammer **12** aufgespannt wird. Dieser dreiecksförmige Querschnitt der Presskammer **12** geht mit den eingangs dargelegten Nachteilen einher. Insbesondere ist die gezeigte Rundballenpresse **1'** gemäß dem Stand der Technik nicht dazu geeignet, schwach verdichtete Rundballen **2** zu erzeugen.

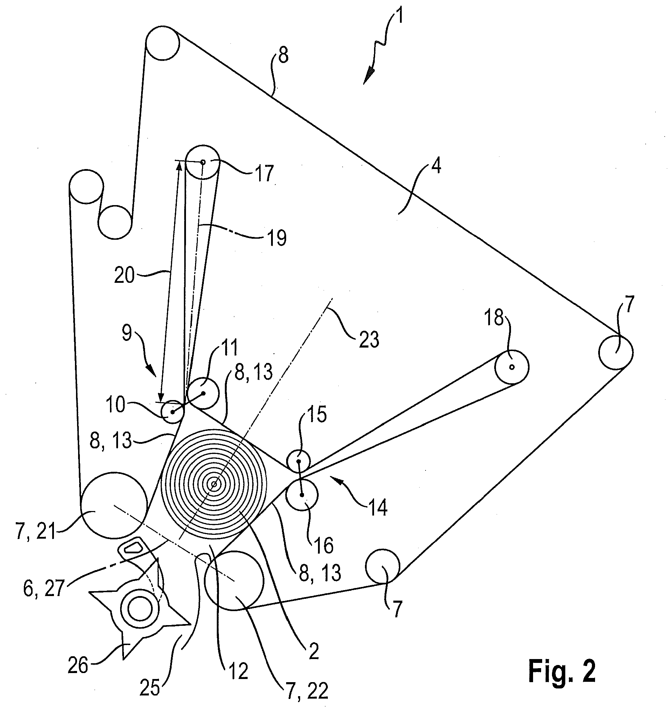

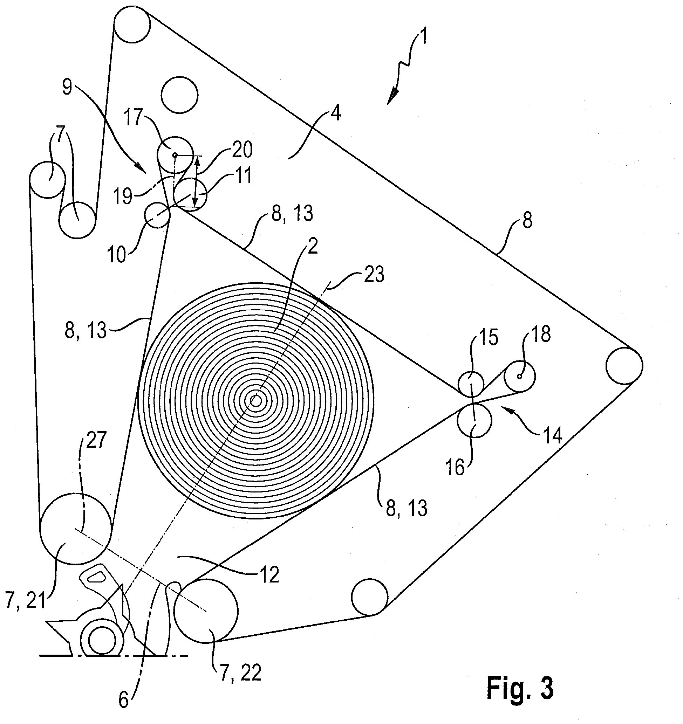

Ein weiteres Ausführungsbeispiel, das in den **Figuren 2** **und** **3** dargestellt ist, beschreibt demgegenüber eine erfindungsgemäße Rundballenpresse **1.** Diese ist im Unterschied zu der bekannten Rundballenpresse **1'** mit zwei Stelleinrichtungen **9, 14** ausgestattet, die hier beispielhaft jeweils mit zwei Stellrollen **10, 11, 15, 16** ausgestattet sind. Die zusätzliche Stelleinrichtung **14** erzeugt eine weitere Umlenkstelle für den Pressriemen **8,** sodass mittels der beiden seitlich des Übertrittsquerschnitt **6** angeordneten Führungsrollen **21, 22** sowie der beiden Stelleinrichtungen **9, 14** eine viereckige Presskammer **12** aufgespannt wird. Der Übertrittsquerschnitt **6** befindet sich in dem gezeigten Beispiel auf einer Ebene **27,** die die Rotationsachsen der beiden Führungsrollen **21, 22** beinhaltet, die den Übertrittsquerschnitt **6** beidseits begrenzen. Weiterhin ist die Presskammer **12** in dem gezeigten Beispiel trapezförmig ausgebildet, wobei die Presskammer **12** ich einer Mittelebene **23** symmetrisch ausgebildet ist. Diese Mittelebene **23** ist senkrecht zu dem Übertrittsquerschnitt **6** sowie parallel zu der Querrichtung der Rundballenpresse **1** orientiert und mittig an dem Übertrittsquerschnitt **6** angeordnet. Die Trapezform der Presskammer **12** ist derart ausgestaltet, dass sich ein senkrecht zu der Mittelebene **23** gemessener Querschnitt der Presskammer **12** ausgehend von dem Übertrittsquerschnitt **6** sukzessive erweitert. Diese symmetrische Ausgestaltung der Presskammer **12** bezüglich der Mittelebene **23** führt dazu, dass eine Rotationsachse des jeweilig im Entstehen begriffenen Rundballens **2** typischerweise zumindest im Wesentlichen in der Mittelebene **23** liegt.

In dem gezeigten Beispiel wirken die Stelleinrichtungen **9, 14** jeweils mit einer Umlenkrolle **17, 18** zusammen. Diese sind derart angeordnet, dass sich der Pressriemen **8** ausgehend von einer ersten Stellrolle **10, 15** der jeweiligen Stelleinrichtung **9, 14** zunächst zu der jeweils zugeordneten Umlenkrolle **17, 18** und sodann ausgehend von der Umlenkrolle **17, 18** zu der jeweiligen zweiten Stellrolle **11, 16** erstreckt. Die einander zugeordneten Stellrollen **10, 11, 15, 16** der beiden Stelleinrichtungen **9, 14** befinden sich jeweils in einem Abstand **20** von ihrer jeweils zugeordneten Umlenkrolle **17, 18.** Die Stellrollen **10, 11, 15, 16** sind derart bewegbar innerhalb des Innenraums **4** der Rundballenpresse **1** ausgebildet, dass sie entlang einer Verbindungsstrecke **19** relativ zu der zugeordneten Umlenkrolle **17, 18** bewegbar sind. Dies hat zur Folge, dass unmittelbar an die Stellrollen **10, 11, 15, 16** angeschlossene Laufstreckenabschnitte **13** des Pressriemens **8** innerhalb des Innenraums **4** gleichermaßen verlagerbar sind. Das Ergebnis einer entsprechenden Verlagerung der Stellrollen **10, 11, 15, 16** inklusive einer damit einhergehenden Verlagerung der genannten Laufstreckenabschnitte **13** des Pressriemens **8** ist besonders gut im Vergleich der in den **Figuren 2** **und** **3** dargestellten Zustände der erfindungsgemäßen Rundballenpresse **1** erkennbar. Insbesondere ergibt sich, dass ein Abstand **20** zwischen einem jeweiligen Rollenpaar der Stellrollen **10, 11, 15, 16** und der jeweils zugehörigen Umlenkrolle **17, 18** verändert ist. Dies ist auf die Bewegung der jeweiligen Stellrollen **10, 11, 15, 16** entlang der Verbindungsstrecke **19** zurückzuführen.

In dem gezeigten Beispiel hat die Bewegung der Stellrollen **10, 11, 15, 16** bzw. die Verstellung der beiden Stelleinrichtungen **9, 14** ausgehend von dem in **Figur 2** gezeigten Zustand hin zu dem in **Figur 3** gezeigten Zustand synchron stattgefunden, sodass die Presskammer **12** insgesamt ihre symmetrische sowie trapezförmige Geometrie beibehalten hat. Somit liegt die Rotationsachse des im Entstehen begriffenen Rundballens 2 weiterhin zumindest in etwa in der Mittelebene **23.** In dem in **Figur 3** gezeigten Zustand ist der Rundballen **2** nahezu fertiggestellt, wobei ein Volumen der Presskammer **12** kaum mehr vergrößerbar ist, da sich die Stellrollen **10, 11, 15, 16** der Stelleinrichtungen **9, 14** bereits in einem nahezu minimalen Abstand **20** zu den zugeordneten Umlenkrollen **17, 18** befinden.

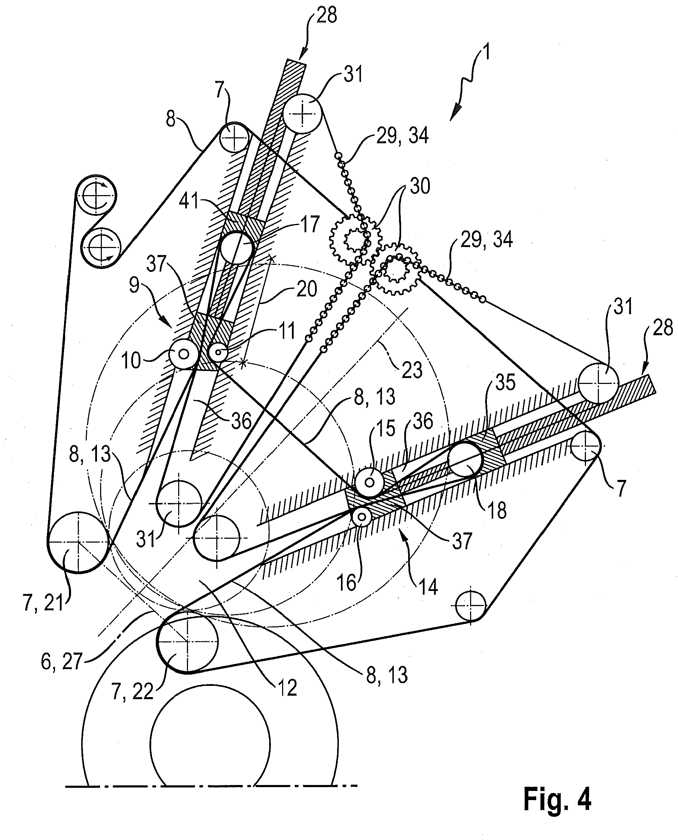

In einem in **Figur 4** dargestellten weiteren Ausführungsbeispiel ist veranschaulicht, auf welche Weise die Stelleinrichtungen **9, 14** ausgebildet sein können, um eine insbesondere synchrone Bewegung der ihnen zugeordneten Stellrollen **10, 11, 15, 16** erzeugen zu können. Zunächst sind in dem gezeigten Beispiel die Stelleinrichtungen **9, 14** jeweils mit einem Linearantrieb **28** ausgestattet, der eine Kolben-Zylinder-Einheit umfasst. Die Stellrollen **10, 11, 15, 16** der Stelleinrichtungen **9, 14** sind jeweils auf einem zugeordneten Führungsschlitten **37** angeordnet, der innerhalb eines Führungskanals **36** mittels des Linearantrieb **28** bewegbar ist. Weiterhin befinden sich die jeweils den Stelleinrichtungen **9, 14** zugeordneten Umlenkrollen **17, 18** gleichermaßen auf einem Trägerschlitten **35,** der ortsfest innerhalb des Führungskanals **36** angeordnet ist. Mittels einer Betätigung des Linearantrieb **28** wird ein Kolben desselben, an dem der Führungsschlitten **37** der jeweiligen Stelleinrichtung **9, 14** angeordnet ist, innerhalb des Führungskanals bewegt, wodurch der Abstand **20** des von den jeweiligen Stellrollen **10, 11, 15, 16** gebildeten Rollenpaares von der zugehörigen Umlenkrolle **17, 18** verändert wird.

Der Führungsschlitten **37** einer jeweiligen Stelleinrichtung **9, 14** ist an seinen beiden Enden innerhalb des Führungskanals **36** mit einer Zugkette **29** gekoppelt. Diese ist mittels Umlenkrollen **31** sowie einem Zahngetriebe **30** in einem Umlauf geführt, sodass eine Bewegung des Führungsschlittens **37** innerhalb des Führungskanals **36** mit einer entsprechenden Bewegung der Zugkette **29** um die Umlenkrollen **31** und insbesondere um das Zahngetriebe **30** einhergeht. Hierfür umfasst die Zugkette **29** einen Eingriffbereich **34,** der dazu geeignet ist, mit einer komplementären Zahnung des Zahngetriebes **30** zusammenzuwirken. Dies führt dazu, dass eine Bewegung der Zugkette **29** unmittelbar in eine Rotation des Zahlgetriebes **30** übersetzt wird.

Wie sich besonders gut anhand der Darstellung gemäß **Figur 4** ergibt, sind die Stelleinrichtungen **9, 14** sowie der beschriebene zugehörige Zugkettenmechanismus hier beispielhaft symmetrisch ausgebildet, wobei beide Stelleinrichtungen **9, 14** jeweils mit einem Zahngetriebe **30** über eine jeweils zugehörige Zugkette **29** verbunden sind. Die Zahnbetriebe **30** weisen jeweils einen äußeren Zahnkranz auf, mittels dessen diese miteinander kämmen, sodass eine Rotation des einen Zahngetriebes **30** unweigerlich zu einer entsprechenden Rotation des jeweils anderen Zahngetriebes **30** führt. Es versteht sich, dass die Rotation eines jeweiligen Zahngetriebes **30** wiederum mit einer Bewegung der Zugkette **29** und folglich mit einer entsprechenden Bewegung des Führungsschlittens **37** Land der darauf angeordneten Stellrollen **10, 11, 15, 16** einhergeht. Entsprechend ist mittels der gezeigten Ausführungsform sichergestellt, dass die Führungsschlitten **37** der beiden Stelleinrichtungen **9, 14** sich in jedem Fall synchron zueinander bewegen. Dies hat wiederum zur Folge, dass eine Veränderung des Querschnitts sowie des Volumens der Presskammer **12** symmetrisch stattfindet, sodass die Presskammer **12** fortwährend symmetrisch bezüglich der Mittelebene **23** ausgebildet ist.

### Bezugszeichenliste

- 1: Rundballenpresse
- 2: Rundballen
- 3: Gehäuse
- 4: Innenraum
- 5: Zuführeinrichtung
- 6: Übertrittquerschnitt
- 7: Führungsrolle
- 8: Pressriemen
- 9: Stelleinrichtung
- 10: Stellrolle
- 11: Stellrolle
- 12: Presskammer
- 13: Laufstreckenabschnitt
- 14: Stelleinrichtung
- 15: Stellrolle
- 16: Stellrolle
- 17: Umlenkrolle
- 18: Umlenkrolle
- 19: Verbindungsstrecke
- 20: Abstand
- 21: Führungsrolle
- 22: Führungsrolle
- 23: Mittelebene
- 24: Spannvorrichtung
- 25: Zuführkanal
- 26: Schneideinrichtung
- 27: Ebene
- 28: Linearantrieb
- 29: Zugkette
- 30: Zahngetriebe
- 31: Umlenkrolle
- 32: Schwenkachse
- 33: Schwenkarm
- 34: Eingriffbereich
- 35: Trägerschlitten
- 36: Führungskanal
- 37: Führungsschlitten

## Patentansprüche

1. Landwirtschaftliche Rundballenpresse (1), insbesondere zum Pressen halmartigen Ernteguts zu Rundballen (2), umfassend
- einen von einem Gehäuse (3) eingefassten Innenraum (4),
- eine Zuführeinrichtung (5), mittels derer Erntegut durch einen Übertrittsquerschnitt (6) hindurch dem Innenraum (4) zuführbar ist,
- eine Mehrzahl von Führungsrollen (7), die sich innerhalb des Innenraums (4) in eine Querrichtung der Rundballenpresse (1) erstrecken,
- einen Pressriemen (8), der in Form eines Endlosriemens ausgebildet und derart um die Führungsrollen (7) gelegt ist, dass er innerhalb des Innenraums (4) entlang einer Laufstrecke umlaufen kann, sowie
- eine Stelleinrichtung (9), die mindestens eine sich parallel zu den Führungsrollen (7) erstreckende Stellrolle (10) umfasst,
wobei mindestens eine der Führungsrollen (7) in Form einer Antriebsrolle ausgebildet ist, mittels derer der Pressriemen (8) angetrieben wird,
wobei der Pressriemen (8) entlang seiner Laufstrecke eine Presskammer (12) aufspannt, die mit dem Übertrittsquerschnitt (6) zusammenwirkt, sodass mittels der Zuführeinrichtung (5) in den Innenraum (4) geführtes Erntegut in die Presskammer (12) gelangt,
wobei die Stellrolle (10) derart entlang der Laufstrecke des Pressriemens (8) positioniert sind, dass mindestens einer sich unmittelbar an die Stellrolle (10) anschließende Laufstreckenabschnitt (13) die Presskammer (12) zumindest teilweise begrenzt,
wobei die Stellrolle (10) der Stelleinrichtung (9) derart bewegbar ausgebildet ist, dass zumindest ein Teil der Laufstrecke des Pressriemens (8) verlagerbar ist,
**gekennzeichnet durch**
mindestens eine zweite Stelleinrichtung (14), deren Stellrolle (15) in Wirkverbund mit der Stellrolle (10) der ersten Stelleinrichtung (9) die Presskammer (12) zumindest teilweise aufspannt,
wobei die Stellrolle (15) der zweiten Stelleinrichtung (14) derart bewegbar ausgebildet ist, dass zumindest ein Teil der Laufstrecke des Pressriemens (8) innerhalb des Innenraums (4) verlagerbar ist,
wobei mindestens eine der Stelleinrichtungen (9, 14), vorzugsweise beide Stelleinrichtungen (9, 14), jeweils ein Rollenpaar aufweist, das zwei einander zugeordnete Stellrollen (10, 11, 15, 16) umfasst, wobei vorzugsweise beide Stellrollen (10, 11, 15, 16) bewegbar ausgebildet sind,
wobei mindestens eine der Stelleinrichtungen (9, 14), vorzugsweise beide Stelleinrichtungen (9, 14), mindestens einen Linearantrieb (28) umfasst, der eingerichtet ist, die Stellrollen (10, 11, 15, 16) innerhalb des Innenraums (4) entlang einer Geraden zu verlagern, wobei sich diese Gerade vorzugsweise zwischen den Stellrollen (10, 11, 15, 16) und einer diesen zugeordneten, feststehenden Umlenkrolle (17, 18) erstreckt.

2. Rundballenpresse (1) nach Anspruch 1, **dadurch gekennzeichnet, dass** die Stellrollen (10, 11, 15, 16) der jeweiligen Stelleinrichtung (9, 14) relativ zueinander festgelegt sind, sodass eine Relativposition der Stellrollen (10, 11, 15, 16) im Zuge von deren Bewegung innerhalb des Innenraums (4) unverändert bleibt.

3. Rundballenpresse (1) nach Anspruch 1 oder 2, **dadurch gekennzeichnet, dass** mindestens einer der Stelleinrichtungen (9, 14), vorzugsweise beiden Stelleinrichtungen (9, 14), jeweils mindestens eine Umlenkrolle (17, 18) zugeordnet ist, die derart mit den Stellrollen (10, 11, 15, 16) der Stelleinrichtung (9, 14) zusammenwirkt, dass sich der Pressriemen (8) ausgehend von der ersten Stellrolle (10, 15) zu der Umlenkrolle (17, 18) und von der Umlenkrolle (17, 18) zu der zweiten Stellrolle (11, 16) erstreckt.

4. Rundballenpresse (1) nach Anspruch 3, **dadurch gekennzeichnet, dass** die Stellrollen (10, 11, 15, 16) entlang einer Verbindungsstrecke (19) zwischen den Stellrollen (10, 11, 15, 16) und der diesen zugeordneten Umlenkrolle (17, 18) bewegbar sind, sodass sich ein Abstand (20) zwischen den Stellrollen (10, 11, 15, 16) und der Umlenkrolle (17, 18) verändert.

5. Rundballenpresse (1) nach einem der Ansprüche 1 bis 4, **dadurch gekennzeichnet, dass** die beiden Stelleinrichtungen (9, 14) derart miteinander gekoppelt sind, dass ihre Stellrolle (10, 11, 15, 16) synchron zueinander innerhalb des Innenraums (4) verlagerbar sind.

6. Rundballenpresse (1) nach einem der Ansprüche 1 bis 5, **dadurch gekennzeichnet, dass** sich der Übertrittsquerschnitt (6) zwischen zwei parallel zu der Querrichtung der Rundballenpresse (1) erstreckenden Führungsrollen (21, 22) erstreckt, wobei der Übertrittsquerschnitt (6) vorzugsweise in einer Ebene (27) liegt, die Mittelachsen der beiden Führungsrollen (21, 22) enthält.

7. Rundballenpresse (1) nach Anspruch 6, **dadurch gekennzeichnet, dass** die beiden den Übertrittsquerschnitt (6) begrenzenden Führungsrollen (21 ,22) gemeinsam mit beiden Stelleinrichtungen (9, 14) - im Querschnitt der Rundballenpresse (1) betrachtet - eine viereckige Presskammer (12) aufspannen, wobei sich der Pressriemen (8) ausgehend von einer ersten Führungsrolle (21) zunächst zu der ersten Stelleinrichtung (9), danach zu der zweiten Stelleinrichtung (14) und schließlich zu der zweiten Führungsrolle (22) erstreckt.

8. Rundballenpresse (1) nach Anspruch 7, **dadurch gekennzeichnet, dass** die Presskammer (12) - im Querschnitt betrachtet - an drei ihrer Seiten mittels des Pressriemens (8) begrenzt ist und an ihrer vierten Seite den Übertrittsquerschnitt (6) aufweist.

9. Rundballenpresse (1) nach Anspruch 7 oder 8, **dadurch gekennzeichnet, dass** die Presskammer (12) trapezförmig ausgebildet ist, wobei sich die Presskammer (12) ausgehend von dem Übertrittsquerschnitt (6) erweitert.

10. Rundballenpresse (1) nach einem der Ansprüche 6 bis 9, **dadurch gekennzeichnet, dass** die Presskammer (12) bezüglich einer senkrecht zu dem Übertrittquerschnitt (6) orientierten sowie mittig am Übertrittsquerschnitt (6) gelegene Mittelebene (23) symmetrisch ausgebildet ist.

11. Rundballenpresse (1) nach Anspruch 1, **dadurch gekennzeichnet, dass** der Linearantrieb (28) eine Kolben-Zylinder-Einheit umfasst.

## Claims

1. An agricultural round baler (1), in particular for baling stalk-like harvested material into round bales (2), comprising:
- an interior space (4) surrounded by a housing (3),
- a feeding device (5), by means of which harvested material can be fed to the interior space (4) through a transfer cross section (6),
- a plurality of guide rollers (7) which extend within the interior space (4) in a transverse direction of the round baler (1),
- a baler belt (8) which is configured in the form of an endless belt and is positioned around the guide rollers (7) in a manner such that it can run around a run path within the interior space (4), as well as
- an adjustment device (9) which comprises at least one adjustment roller (10) extending parallel to the guide rollers (7), wherein at least one of the guide rollers (7) is configured in the form of a drive roller by means of which the baler belt (8) is driven,
wherein along its run path, the baler belt (8) sets up a bale chamber (12) which interacts with the transfer cross section (6) so that harvested material guided into the interior space (4) by means of the feeding device (5) enters the bale chamber (12), wherein the adjustment roller (10) is positioned along the run path of the baler belt (8) in a manner such that at least one section of run path (13) directly adjacent to the adjustment roller (10) at least partly delimits the bale chamber (12), wherein the adjustment roller (10) of the adjustment device (9) is movably configured in a manner such that at least a portion of the run path of the baler belt (8) is displaceable,
**characterized by**
at least one second adjustment device (14), the adjustment roller (15) of which, which is operatively connected to the adjustment roller (10) of the first adjustment device (9), sets up at least a portion of the bale chamber (12),
wherein the adjustment roller (15) of the second adjustment device (14) is movably configured in a manner such that at least a portion of the run path of the baler belt (8) is displaceable within the interior space (4),
wherein at least one of the adjustment devices (9, 14), preferably both adjustment devices (9, 14), has a respective roller pair which comprises two associated adjustment rollers (10, 11, 15, 16), wherein preferably, both adjustment rollers (10, 11, 15, 16) are configured so as to be movable,
wherein at least one of the adjustment devices (9, 14), preferably both adjustment devices (9, 14), comprises at least one linear drive (28) which is configured so as to displace the adjustment rollers (10, 11, 15, 16) within the interior space (4) along a straight line, wherein the straight line preferably extends between the adjustment rollers (10, 11, 15, 16) and a fixed deflecting roller (17, 18) associated therewith.

2. The round baler (1) according to claim 1, **characterized in that** the adjustment rollers (10, 11, 15, 16) of the respective adjustment device (9, 14) are fixed with respect to each other, so that a relative position of the adjustment rollers (10, 11, 15, 16) remains unchanged during the course of their movement within the interior space (4).

3. The round baler (1) according to claim 1 or claim 2, **characterized in that** at least one of the adjustment devices (9, 14), preferably both adjustment devices (9, 14), is respectively associated with at least one deflecting roller (17, 18) which interacts with the adjustment rollers (10, 11, 15, 16) of the adjustment device (9, 14) in a manner such that, starting from the first adjustment roller (10, 15), the baler belt (8) extends to the deflecting roller (17, 18) and from the deflecting roller (17, 18) to the second adjustment roller (11, 16).

4. The round baler (1) according to claim 3, **characterized in that** the adjustment rollers (10, 11, 15, 16) can be moved along a connecting line (19) between the adjustment rollers (10, 11, 15, 16) and the deflecting roller (17, 18) associated therewith, so that a distance (20) between the adjustment rollers (10, 11, 15, 16) and the deflecting roller (17, 18) is varied.

5. The round baler (1) according to one of claims 1 to 4, **characterized in that** the two adjustment devices (9, 14) are coupled to one another in a manner such that their adjustment rollers (10, 11, 15, 16) are displaceable in synchronization with respect to each other within the interior space (4).

6. The round baler (1) according to one of claims 1 to 5, **characterized in that** the transfer cross section (6) extends between two guide rollers (21, 22) which extend parallel to the transverse direction of the round baler (1), wherein the transfer cross section (6) preferably lies in a plane (27) which includes the central axes of the two guide rollers (21, 22).

7. The round baler (1) according to claim 6, **characterized in that** the two guide rollers (21, 22) delimiting the transfer cross section (6) jointly with both adjustment devices (9, 14) - when viewed in the cross section of the round baler (1) - define a quadrangular bale chamber (12) wherein, starting from a first guide roller (21), the baler belt (8) initially extends to the first adjustment device (9), thereafter to the second adjustment device (14) and finally to the second guide roller (22).

8. The round baler (1) according to claim 7, **characterized in that** the bale chamber (12) - when viewed in cross section - is delimited on three of its sides by means of the baler belt (8) and has the transfer cross section (6) on its fourth side.

9. The round baler (1) according to claim 7 or claim 8, **characterized in that** the bale chamber (12) is trapezoidal in shape, wherein the bale chamber (12) broadens out from the transfer cross section (6).

10. The round baler (1) according to one of claims 6 to 9, **characterized in that** the bale chamber (12) is symmetrical in configuration with respect to a central plane (23) which is orientated perpendicular to the transfer cross section (6) and located centrally in the transfer cross section (6).

11. The round baler (1) according to claim 1, **characterized in that** the linear drive (28) comprises a piston and cylinder unit.

## Revendications

1. Presse agricole à balles rondes (1), en particulier pour le pressage en balles rondes (2) de produit récolté sous forme de tiges, incluant
- un espace intérieur (4) entouré par un carter (3),
- un équipement d'amenée (5) au moyen duquel le produit récolté peut être amené à l'espace intérieur (4) en traversant une section transversale de passage (6),
- une pluralité de rouleaux de guidage (7) qui, à l'intérieur de l'espace intérieur (4), s'étendent dans une direction transversale de la presse à balles rondes (1),
- une courroie de pressage (8) qui est conçue sous la forme d'une courroie sans fin et passe autour des rouleaux de guidage (7) de façon à pouvoir défiler le long d'un trajet à l'intérieur de l'espace intérieur (4), ainsi que
- un équipement de positionnement (9) qui inclut au moins un rouleau de positionnement (10) s'étendant parallèlement aux rouleaux de guidage (7),
au moins un des rouleaux de guidage (7) étant conçu en forme de rouleau d'entraînement au moyen duquel la courroie de pressage (8) est entraînée,
la courroie de pressage (8) définissant le long de son trajet une chambre de pressage (12) qui coopère avec la section transversale de passage (6), de sorte que du produit récolté guidé jusque dans l'espace intérieur (4) au moyen de l'équipement d'amenée (5) pénètre dans la chambre de pressage (12),
le rouleau de positionnement (10) étant positionné le long du trajet de la courroie de pressage (8) de façon qu'au moins une portion de trajet (13) se raccordant directement au rouleau de positionnement (10) limite la chambre de pressage (12) au moins en partie,
le rouleau de positionnement (10) de l'équipement de positionnement (9) étant conçu de façon mobile, de façon qu'au moins une partie du trajet de la courroie de pressage (8) soit mobile,
**caractérisée par**
au moins un second équipement de positionnement (14) dont le rouleau de positionnement (15) définit au moins en partie la chambre de pressage (12) en liaison active avec le rouleau de positionnement (10) du premier équipement de positionnement (9),
le rouleau de positionnement (15) du second équipement de positionnement (14) étant conçu de manière mobile, de façon qu'au moins une partie du trajet de la courroie de pressage (8) soit déplaçable à l'intérieur de l'espace intérieur (4),
au moins un des équipements de positionnement (9, 14), de préférence les deux équipements de positionnement (9, 14) comportant respectivement une paire de rouleaux qui inclut deux rouleaux de positionnement associés l'un à l'autre (10, 11, 15, 16), de préférence les deux rouleaux de positionnement (10, 11, 15, 16) étant conçus de façon mobile,
au moins un des équipements de positionnement (9, 14), de préférence les deux équipements de positionnement (9, 14) incluant au moins un moyen d'entraînement linéaire (28) qui est agencé pour déplacer les rouleaux de positionnement (10, 11, 15, 16) à l'intérieur de l'espace intérieur (4) le long d'une droite, cette droite s'étendant de préférence entre les rouleaux de positionnement (10, 11, 15, 16) et un rouleau de renvoi fixe (17, 18) associé à ceux-ci.

2. Presse à balles rondes (1) selon la revendication 1, **caractérisée en ce que** les rouleaux de positionnement (10, 11, 15, 16) de l'équipement de positionnement respectif (9, 14) sont disposés l'un par rapport à l'autre de façon qu'une position relative des rouleaux de positionnement (10, 11, 15, 16) au cours de leur déplacement à l'intérieur de l'espace intérieur (4) reste inchangée.

3. Presse à balles rondes (1) selon la revendication 1 ou 2, **caractérisée en ce qu'**à au moins un des équipements de positionnement (9, 14), de préférence aux deux équipements de positionnement (9, 14) est associé respectivement au moins un rouleau de renvoi (17, 18) qui coopère avec les rouleaux de positionnement (10, 11, 15, 16) de l'équipement de positionnement (9, 14), de façon que la courroie de pressage (8) s'étende à partir du premier rouleau de positionnement (10, 15) au rouleau de renvoi (17, 18) et du rouleau de renvoi (17, 18) au second rouleau de positionnement (11, 16) .

4. Presse à balles rondes (1) selon la revendication 3, **caractérisée en ce que** les rouleaux de positionnement (10, 11, 15, 16) sont mobiles le long d'un trajet de liaison (19) entre les rouleaux de positionnement (10, 11, 15, 16) et le rouleau de renvoi (17, 18) associé à ceux-ci, de sorte qu'une distance (20) entre les rouleaux de positionnement (10, 11, 15, 16) et le rouleau de renvoi (17, 18) varie.

5. Presse à balles rondes (1) selon une des revendications 1 à 4, **caractérisée en ce que** les deux équipements de positionnement (9, 14) sont couplés entre eux, de façon que leurs rouleaux de positionnement (10, 11, 15, 16) soient déplaçables de façon synchrone entre eux à l'intérieur de l'espace intérieur (4).

6. Presse à balles rondes (1) selon une des revendications 1 à 5, **caractérisée en ce que** la section transversale de passage (6) s'étend entre deux rouleaux de guidage (21, 22) s'étendant parallèlement à la direction transversale de la presse à balles rondes (1), la section transversale de passage (6) se trouvant de préférence dans un plan (27) qui renferme les axes médians des deux rouleaux de guidage (21, 22).

7. Presse à balles rondes (1) selon la revendication 6, **caractérisée en ce que** les deux rouleaux de guidage (21, 22) limitant la section transversale de passage (6) définissent conjointement avec les deux équipements de positionnement (9, 14) - vus en coupe transversale de la presse à balles rondes (1) - une chambre de pressage quadrangulaire (12), la courroie de pressage (8) s'étendant, à partir d'un premier rouleau de guidage (21), d'abord jusqu'au premier équipement de positionnement (9), ensuite jusqu'au second équipement de positionnement (14) et enfin jusqu'au second rouleau de guidage (22).

8. Presse à balles rondes (1) selon la revendication 7, **caractérisée en ce que** la chambre de pressage (12) - vue en coupe transversale - est limitée sur trois de ses côtés au moyen de la courroie de pressage (8) et comporte sur son quatrième côté la section transversale de passage (6).

9. Presse à balles rondes (1) selon la revendication 7 ou 8, **caractérisée en ce que** la chambre de pressage (12) est conçue sous forme trapézoïdale, la chambre de pressage (12) s'élargissant à partir de la section transversale de passage (6).

10. Presse à balles rondes (1) selon une des revendications 6 à 9, **caractérisée en ce que** la chambre de pressage (12) est conçue de manière symétrique par rapport à un plan médian (23) orienté perpendiculairement à la section transversale de passage (6) et situé au centre de la section transversale de passage (6).

11. Presse à balles rondes (1) selon la revendication 1, **caractérisée en ce que** le moyen d'entraînement linéaire (28) inclut une unité piston-cylindre.
